(19) **Europäisches Patentamt / European Patent Office / Office européen des brevets**

(11) **EP 3 169 505 B1**

(12) **EUROPÄISCHE PATENTSCHRIFT**

(45) Veröffentlichungstag und Bekanntmachung des Hinweises auf die Patenterteilung:
**25.04.2018 Patentblatt 2018/17**

(21) Anmeldenummer: **15747367.9**

(22) Anmeldetag: **03.06.2015**

(51) Int Cl.:
**B29C 47/92** *(2006.01)*  **G01B 11/06** *(2006.01)*
**G01N 21/3581** *(2014.01)*

(86) Internationale Anmeldenummer:
**PCT/DE2015/100221**

(87) Internationale Veröffentlichungsnummer:
**WO 2016/008470 (21.01.2016 Gazette 2016/03)**

(54) **MESSVORRICHTUNG UND VERFAHREN ZUR VERMESSUNG VON PRÜFOBJEKTEN**

MEASURING DEVICE AND METHOD FOR MEASURING TEST OBJECTS

DISPOSITIF DE MESURE ET PROCÉDÉ DE MESURE D'OBJETS À CONTRÔLER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2014 DE 102014214046**

(43) Veröffentlichungstag der Anmeldung:
**24.05.2017 Patentblatt 2017/21**

(73) Patentinhaber: **iNOEX GmbH**
**49324 Melle (DE)**

(72) Erfinder: **STICH, Dominik**
**97218 Gerbrunn (DE)**

(74) Vertreter: **Bremer, Ulrich**
**Advopat Patent- und Rechtsanwälte**
**Brümmerstedt, Oelfke, Seewald & König**
**Theaterstr. 6**
**30159 Hannover (DE)**

(56) Entgegenhaltungen:
**EP-A1- 2 752 287      WO-A1-95/07471**
**DE-A1- 19 852 335      DE-A1-102011 078 539**
**US-A1- 2010 079 754      US-A1- 2011 112 795**

**Beschreibung**

Die Erfindung betrifft eine Messvorrichtung und ein Verfahren zur Vermessung von Prüfobjekten. Die zu vermessenden Prüfobjekte weisen insbesondere zumindest abschnittsweise mindestens eine hohlrechteckförmige oder hohlzylinderförmige Materialschicht auf.

Bekannte Messvorrichtungen und Verfahren zur Vermessung von Prüfobjekten für Rohre mit zylinderförmigem oder rechteckförmigem Querschnitt basieren in der Regel auf Röntgen- oder Ultraschalltechnik. Typische röntgenbasierte Wanddickenmesssysteme verwenden zwei Röntgenquellen und zwei Zeilendetektoren. Bei einer Vollprüfung von Wand- und Schichtdicken mittels Ultraschalltechnik werden in der Regel mehrere Sender-Empfänger-Einheiten verwendet, welche konzentrisch um ein zylinderförmiges Prüfobjekt anzuordnen sind, sodass der Ultraschall radial auf das Rohr einfällt und mehrere Messpunkte erzeugt. Neben den röntgen- und ultraschallbasierten Systemen gewinnen auf der Terahertz-(THz)-Technik basierende Wanddickenmesssysteme an Bedeutung. Unter THz-Strahlung versteht man elektromagnetische Strahlung im Frequenzbereich von 0,1 bis 10 THz.

Der Erfindung liegt die Aufgabe zugrunde, eine Messvorrichtung zu schaffen, die in einfacher und flexibler Weise die Vermessung von Prüfobjekten mit mindestens einer zumindest abschnittsweise hohlrechteckförmiger oder hohlzylinderförmiger Materialschicht ermöglicht. Dabei soll insbesondere der konstruktive Aufbau der Messvorrichtung vereinfacht, Platz gespart und ein Bauteilaufwand reduziert werden.

Die DE 10 2011 078 539 A1 beschreibt ein Verfahren und eine Vorrichtung zur Erweiterung der Ausleuchtung eines Prüfobjektes, das durch ein elektromagnetisches Mikrowellensignal, das von einer Senderantenne ausgestrahlt wird, beleuchtet wird. Das vom Prüfobjekt reflektierte Mikrowellensignal wird von mindestens einer Empfangsantenne empfangen. Hierbei sind Reflektorelemente zu Prüfobjekt hin ausgerichtet angeordnet, so dass die vom Reflektorelement und vom Prüfobjekt reflektierten Mikrowellensignale in einer Empfangsantenne empfangen werden, wobei zusätzlich hierzu Mikrowellenstrahlen, die von einer Senderantenne ohne Reflektion an dem Reflektorelement auf das Prüfobjekt treffen, empfangen und verwendet werden.

Die US 2011/0112795 A1 beschreibt eine lichtbündelnde Linse mit einer Vielzahl von Linsen, die Seite an Seite, insbesondere auch als Quadrat, angeordnet sind und ein lichtempfangendes Element umgeben.

Die WO 95/07471 A1 beschreibt ein optisches System zum Detektieren des Vorhandenseins und der Position von wenigstens einem stationären oder sich bewegenden Objekt. Hierbei sind Ausführungsformen gezeigt mit orthogonaler Anordnung von zwei Spiegeln und zwei Kollimationslinsen.

Die US 2010/0079754 A1 zeigt eine Vorrichtung zu Raman-Spektroskopie, wobei Lichtkonzentratoren zum Bündeln von Licht sowie weiterhin Spiegel vorgesehen sind.

Die Ep 2 752 287 A1 beschreibt eine Vorrichtung zum Vermessen von Extrusions-Produkten, insbesondere Rohren mittels THz-Strahlung in Transmission.

Die DE 198 52 335 A1 beschreibt eine Einrichtung zur Fehlererfassung und/oder Wanddickenmessung bei durchlaufenden Bändern oder Rohren aus Kunststoff mittels Ultraschallsignalen.

Diese Aufgabe wird durch eine Messvorrichtung mit den Merkmalen des Anspruchs 1 gelöst. Die Messvorrichtung bzw. Reflexions- Messvorrichtung dient zur Durchführung von Reflexionsmessungen an dem zu vermessenden Prüfobjekt. Die Messvorrichtung umfasst eine Sender-Empfänger-Einheit mit einem Sender zum Emittieren von Strahlung in einer x-y-Ebene ausgehend von einem Strahlpunkt und einem zugehörigen Empfänger zum detektieren einer an einem Prüfobjekt reflektierten Strahlung. Eine erste Kollimator-Fokussier-Anordnung der Messvorrichtung hat Kollimator-Fokussier-Elemente zur Umformung der emittierten Strahlung in kollimierte Strahlung und zur Fokussierung der reflektierten Strahlung in den Strahlpunkt, wobei die Kollimator-Fokussier-Elemente derart angeordnet sind, dass zwei benachbarte Kollimator-Fokussier-Elemente in der x-y-Ebene einen Winkel von im Wesentlichen 90° einschließen, sodass die Kollimator-Fokussier-Elemente ein Kollimator-Fokussier-Quadrat bilden. Ein gemeinsamer Brennpunkt der Kollimator-Fokussier-Elemente liegt in der x-y-Ebene im Strahlpunkt. Die Messvorrichtung umfasst ferner einen in der x-y-Ebene liegenden Prüfobjektaufnahmebereich zur Anordnung des Prüfobjekts und mindestens eine Spiegel-Anordnung mit Spiegel- Elementen zum Umlenken der kollimierten Strahlung und der reflektierten Strahlung zwischen der Kollimator-Fokussier-Anordnung und dem Prüfobjektaufnahmebereich. Die Spiegel-Elemente sind derart angeordnet, dass zwei benachbarte Spiegel-Elemente in der x-y-Ebene einen Winkel vom im Wesentlichen 90° einschließen, sodass die Spiegel-Elemente ein Spiegel- Rechteck bilden, wobei Spiegel-Flächen des Spiegel-Rechtecks parallel zu Kollimator-Fokussier-Diagonalen des Kollimator-Fokussier-Quadrats sind. Ferner hat die Messvorrichtung eine Steuereinheit zur Auswertung der detektierten Strahlung.

Vorzugsweise sind vier Kollimator-Fokussier-Elemente vorgesehen, die das Kollimator-Fokussier-Quadrat bilden. Vorteilhafterweise sind vier Spiegel-Elemente in der x-y-Ebene angeordnet, die das Spiegel-Rechteck bilden. Vorteilhafterweise ist das Spiegel-Rechteck als Spiegel-Quadrat ausgebildet. Die Spiegel-Flächen der Spiegel-Elemente sind vorzugsweise identisch ausgebildet. Dabei sind die Spiegelflächen aus einem Material gebildet, das insbesondere für THz-Strahlung als nahezu idealer Spiegel wirkt. Als Material eignet sich elektrisch leitfähiges Material, wie beispielsweise Aluminium oder Stahl. Es ist von Vorteil wenn eine Oberflächenebenheit der Spiegel-Flächen höher als ein Zehntel der kürzesten Wellenlänge der verwendeten THz-Strahlung ist.

Zum Vermessen des Prüfobjekts wird von dem Sender der Senderempfänger-Einheit zunächst Strahlung in Richtung der Kollimator-Fokussier-Elemente der Kollimator-Fokussier-Anordnung emittiert. Die emittierte Strahlung wird mittels der Kollimator-Fokussier-Elemente in kollimierte Strahlung umgeformt. Die kollimierte Strahlung wird mittels der Spiegel-Elemente in den Prüfobjektaufnahmebereich umgelenkt und trifft auf dem Prüfobjekt auf. Von dem Prüfobjekt wird die Strahlung reflektiert. Das Prüfobjekt ist vorzugsweise derart angeordnet, dass eine Mittellängsachse des Prüfobjekts senkrecht zur x-y-Ebene bzw. parallel zu einer z-Richtung verläuft. Die emittierte kollimierte Strahlung trifft senkrecht auf eine Oberfläche des Prüfobjekts, wodurch die reflektierte Strahlung vorzugsweise entlang des selben Strahlengangs in entgegengesetzte Richtung zurück zum Strahlpunkt läuft, wo sie detektiert wird. Die am Prüfobjekt reflektierte Strahlung weist vorzugsweise den selben Strahlengang, jedoch in entgegengesetzter Richtung auf, wie die einfallende Strahlung. Die reflektierte Strahlung wird von den Spiegel-Elementen zu der Kollimator-Fokussier-Anordnung umgelenkt, wo sie in den Strahlpunkt fokussiert wird. Der Empfänger detektiert die reflektierte Strahlung und leitet die Messwerte an die Steuereinheit weiter, welche die detektierte Strahlung bzw. die Messwerte auswertet.

Die erfindungsgemäße Messvorrichtung ist vergleichsweise einfach aufgebaut, da die Sender-Empfänger-Einheit aufgrund der Spiegel-Anordnung in der x-y-Ebene beabstandet zum Prüfobjektaufnahmebereich anordenbar ist. Es ist auch möglich, die Sender-Empfänger-Einheit in der z-Richtung beabstandet zu der x-y-Ebene zu positionieren. Mit der erfindungsgemäßen Messvorrichtung können sowohl hohlrechteckförmige als auch hohlzylinderförmige Prüfobjekte untersucht werden. Durch ein Verschwenken bzw. Drehen der Sender-Empfänger-Einheit um eine durch den Stahlpunkt gehende Rotationsachse ist ein weiter Umfangsbereich des Prüfobjekts mit nur einer Sender-Empfänger-Einheit vermessbar. Beispielsweise ist die Vermessung einer Dicke mindestens einer hohlrechteckfömigen oder hohlzylinderförmigen Materialschicht über den gesamten Umfang möglich.

Das Prüfobjekt ist insbesondere aus Kunststoff ausgebildet und weist eine hohlrechteckförmige oder hohlzylinderförmige Materialschicht bzw. mehrere hohlrechteckförmige oder hohlzylinderförmige Materialschichten auf. Das Prüfobjekt kann parallel zur z-Richtung extrudiert und während der Extrusion vermessen werden.

Die Messvorrichtung ermöglicht insbesondere die Vermessung von Prüfobjekten aus Kunststoff. Die Sender-Empfänger-Einheit ist vorzugsweise derart ausgebildet, dass elektromagnetische Strahlung mit einer Frequenz im Bereich von 0,01 THz bis 50 THz, insbesondere von 0,05 THz bis 20 THz, und insbesondere von 0,1 THz bis 10 THz emittierbar bzw. detektierbar ist. Die Vermessung des Prüfobjekts mittels der Strahlung bzw. THz-Strahlung basiert auf der Messung einer Laufzeitdifferenz der Strahlung, die an den Grenzschichten reflektiert wird. Grenzschichten sind die Oberflächen des Prüfobjekts, beispielsweise eine Rohraußenwand und eine Rohrinnenwand, und aneinander grenzende Materialschichten innerhalb des Prüfobjekts. Die Sender-Empfänger-Einheit ist insbesondere derart ausgebildet, dass THz-Pulse emittierbar bzw. detektierbar sind.

Die Ausgestaltung gemäß Anspruch 3 führt zu einem einfachen Aufbau der Messvorrichtung.

Die Messvorrichtung gemäß Anspruch 4 ist wieder besonders einfach aufgebaut. Bei den Linsen kann es sich um Sammellinsen handeln, mittels welchen die vom Sender emittierte Strahlung in kollimierte Strahlung überführbar ist. Ein gemeinsamer Brennpunkt der Linsen liegt im Strahlpunkt des Senders. Ein Linsendurchmesser der Linsen entspricht vorzugsweise je nach Linsenform in etwa einer Kantenlänge des Kollimator-Fokussier-Quadrats. Ferner ist der reflektierte Strahl durch die Linsen der Kollimator-Fokussier-Anordnung auf einfache Art und Weise auf den Strahlpunkt fokussierbar.

Die Ausgestaltung gemäß Anspruch 5 führt zu einem einfachen Aufbau der Messvorrichtung.

Gemäß Anspruch 6 ist die Spiegel-Anordnung derart ausgebildet, dass ein erstes Spiegel-Element die kollimierte Strahlung auf ein zweites Spiegel-Element umlenkt, wobei das zweite Spiegel-Element die Strahlung auf den Prüfobjektaufnahmebereich umlenkt. Umgekehrt gilt analog, dass das zweite Spiegel-Element die am Prüfobjekt reflektierte Strahlung auf das erste Spiegel-Element umlenkt, wobei das erste Spiegel-Element die Strahlung auf die Kollimator-Fokussier-Anordnung umlenkt.

Eine Messvorrichtung nach Anspruch 7 gewährleistet auf konstruktiv besonders einfache Art und Weise, dass die kollimierte Strahlung zweifach an der Spiegel-Anordnung umgelenkt wird.

Durch eine Messvorrichtung gemäß Anspruch 8 wird die Vermessung des Prüfobjekts über dessen gesamten Umfang ermöglicht. Dadurch, dass die Sender-Empfänger-Einheit derart ausgebildet ist, dass die emittierte Strahlung in eine x-y-Ebene um den Strahlpunkt rotierbar ist, wird gewährleistet, dass durch jeden unter einem Emissions-Winkel emittierten Strahl ein definierter Prüfbereich auf dem Prüfobjekt abtastbar ist.

Eine Messvorrichtung nach Anspruch 9 stellt eine konstruktiv besonders einfache Gestaltung dar. Ein Bauteilaufwand der Messvorrichtung wird gering gehalten.

Durch eine Messvorrichtung nach Anspruch 10 wird eine dauerhaft stabile und zuverlässige Verbindung von optischen und elektrischen Signalen gewährleistet. Es ist vorteilhaft, wenn der Sender und der Empfänger der Sender-Empfänger-Einheit unbeweglich außerhalb der x-y-Ebene positioniert sind. Die vom Sender emittierte Strahlung verläuft entlang der z-Richtung, die senkrecht zur x-y-Ebene verläuft. Die emittierte Strahlung ist im Strahlpunkt durch den Rotations-Spiegel zur Kollimator-Fokussier-Anordnung umlenkbar. Die Rotationsachse des Rotations-Spiegels ist parallel zur z-Richtung. Vorzugsweise wird durch den Rotations-Spiegel erreicht, dass die emittierte Strahlung um 360° rotiert. Durch das Vorsehen eines Rotations-Spiegels wird ein stabiler und äußerst platzsparender Aufbau der Messvorrichtung in der x-y-Ebene erreicht.

Eine Messvorrichtung nach Anspruch 11 ermöglicht eine Anordnung des Senders und des Empfängers entlang der z-Richtung. Eine solche Messvorrichtung gewährleistet in einfacher und platzsparender Weise eine Vermessung des Prüfobjekts. Dadurch, dass der Sender und der Empfänger entlang der z-Richtung, also senkrecht beabstandet von der x-y-Ebene angeordnet sind, wird die von der Kollimator-Fokussier-Anordnung und der Spiegel-Anordnung begrenzte Fläche nicht unnötigerweise von dem Sender und dem Empfänger beeinträchtigt. Der Rotations-Spiegel benötigt einen vergleichsweise geringen Platzbedarf, sodass die Sender-Empfänger-Einheit in der x-y-Ebene äußerst kompakt aufgebaut ist. Die z-Richtung bzw. z-Achse verläuft senkrecht zu der x-y-Ebene. Entsprechend ist der Rotations-Spiegel zur Umlenkung der emittierten Strahlung um 45° zu der x-y-Ebene geneigt.

Eine Messvorrichtung nach Anspruch 12 ermöglicht, dass auch Rohre mit kreiszylindrischen Querschnitt auf besonders einfache Art und Weise über den gesamten Umfang vermessen werden können. Die zweite Kollimator-Fokussier-Anordnung dient zur Fokussierung der kollimierten Strahlung in einen gemeinsamen Prüfobjekt-Brennpunkt und zur Umformung der reflektierten Strahlung in reflektierte kollimierte Strahlung. Die Kollimator-Fokussier-Elemente der Kollimator-Fokussier-Anordnung sind derart gestaltet, dass sie die kollimierte Strahlung so umformen, dass diese senkrecht auf eine Oberfläche des Prüfobjekts einfällt.

Eine Messvorrichtung nach Anspruch 13 ermöglicht auf konstruktiv einfache Art und Weise, dass die von der Spiegel-Anordnung umgelenkte kollimierte Strahlung senkrecht auf eine Oberfläche des Prüfobjekts einfällt.

Eine Messvorrichtung nach Anspruch 14 optimiert den Verlauf der emittierten und reflektierten Strahlung. Ferner wird der zur Verfügung stehende Raum optimal ausgenutzt.

Der Erfindung liegt ferner die Aufgabe zugrunde, ein Verfahren zu schaffen, das in einfacher und flexibler Weise die Vermessung von Prüfobjekten ermöglicht. Das Verfahren soll insbesondere die Vermessung von Prüfobjekten ermöglichen, die zumindest abschnittsweise mindestens eine hohlrechteckförmige oder hohlzylinderförmige Materialschicht aufweisen.

Diese Aufgabe wird weiterhin durch ein Verfahren mit den Merkmalen des unabhängigen Anspruchs 16 gelöst. Die Vorteile des erfindungsgemäßen Verfahrens entsprechen den bereits beschriebenen Vorteilen der erfindungsgemäßen Messvorrichtung. Das erfindungsgemäße Verfahren kann insbesondere auch mit den Merkmalen der Vorrichtungs-Ansprüche, d.h. insbesondere auch Ansprüche 1 bis 15 weitergebildet werden. Entsprechend kann die Messvorrichtung gemäß den Ansprüchen 1 bis 15 durch die Merkmale der Verfahrensansprüche, d.h. insbesondere Ansprüche 16 bis 19, weitergebildet werden. Hierbei ermöglichen die Vorrichtung und das Verfahren insbesondere auch eine Schichtdicken- und Wanddicken-Vermessung von Kunststoff-Objekten wie Rohren, insbesondere durch Laufzeitmessung.

Mit dem erfindungsgemäßen Verfahren ist es möglich, sowohl die Schicht- und Wanddicken eines Rohres mit rechteckigem Querschnitt als auch die Schicht- und Wanddicken eines zylinderförmigen Rohres zu bestimmen. Bei rechteckigen Rohren fällt die emittierte Strahlung senkrecht zur Oberfläche des Prüfobjekts ein. Entsprechend wird bei Rohren mit zylindrischem Querschnitt jeder definierte Prüfbereich der Querschnittsoberfläche mit radial einfallender emittierter Strahlung abgetastet. In beiden Gestaltungsvarianten des Prüfobjekts ist jeweils nur eine Sender-Empfänger-Einheit notwendig.

Ein Verfahren nach Anspruch 17 gewährleistet eine vollumfängliche Vermessung des Prüfobjekts. Entweder die Sender-Empfänger-Einheit als Ganzes rotiert im Strahlpunkt um die Rotationsachse oder ein Rotations-Spiegel. Durch die Rotation wird durch jeden unter einem Emissions-Winkel emittierten Strahl ein definierter Prüfbereich auf dem Prüfobjekt abgetastet. Hierdurch ist nur eine Sender-Empfänger-Einheit notwenig, um den gesamten Umfang eines rechteckförmigen oder hohlzylinderförmigen Prüfobjekts abzutasten. Die Spiegel-Anordnung lenkt die rotierende, kollimierte Strahlung zwischen der Kollimator-Fokussier-Anordnung und dem Prüfobjektaufnahmebereich um. Hierdurch wird eine Vermessung des Prüfobjekts inline im Herstellungsprozess ermöglicht. Im Herstellungsprozess ist das Prüfobjekt selbst in der Regel nicht um seine Mittellängsachse verschwenkbar bzw. drehbar.

Eine Messvorrichtung nach Anspruch 18 gewährleistet zuverlässige und genaue Messergebnisse.

Für den Fall, dass mittels dem erfindungsgemäßen Verfahren Prüfobjekte in Form eines zylindrischen Rohres geprüft werden sollen, wird die emittierte und von der Spiegel-Anordnung umgelenkte Strahlung durch eine zweite Kollimator-Fokussier-Anordnung fokussiert und auf das Prüfobjekt gerichtet. Der Fokuspunkt fällt mit dem Prüfobjekt-Brennpunkt bzw. - Mittelpunkt zusammen. So ist möglich, dass jeder Punkt der einfallenden Wellenfront eines Strahlen-Pulses zeitgleich und senkrecht auf das konzentrisch zum Prüfobjekt-Brennpunkt angeordnete und parallel zur z-Richtung extrudierte Prüfobjekt trifft. Hierdurch wird die Strahlung immer unabhängig von einem Durchmesser des Prüfobjekts ideal reflektiert. Dadurch, dass die Strahlung radial bzw. senkrecht auf die Oberfläche der Prüfobjekte trifft, wird eine hohe Messgenauigkeit erzielt.

Weitere Merkmale, Vorteile und Einzelheiten der Erfindung ergeben sich aus der nachfolgenden Beschreibung mehrerer Ausführungsbeispiele. Es zeigen:

Fig. 1      eine Draufsicht auf eine Messvorrichtung zur Vermessung eines Prüfobjekts gemäß einem ersten Ausführungsbeispiel,

Fig. 2      eine Ansicht der Messvorrichtung gemäß Fig. 1, wobei in einem Prüfobjektaufnahmebereich ein Prüfobjekt mit hohlrechteckförmigem Querschnitt angeordnet ist,

Fig. 3      eine Draufsicht auf eine Messvorrichtung zur Vermessung eines Prüfobjekts gemäß einem zweiten Ausführungsbeispiel,

Fig.4      eine auf Fig. 2 basierende Ansicht der ersten Ausführungsvariante der Messvorrichtung, wobei eine reale Strahlausbreitung dargestellt ist,

Fig. 5      eine auf Fig. 3 basierende Darstellung der zweiten Ausführungsvariante der Messvorrichtung, wobei eine reale Strahlenausbreitung dargestellt ist,

Fig. 6      eine Ansicht der zweiten Ausführungsvariante der Messvorrichtung gemäß Fig. 3 und Fig. 5, wobei eine Aufspaltung und Ausbreitung eines divergenten Strahls gezeigt ist,

Fig. 7      eine erste Ausführungsvariante einer Sender-Empfänger-Einheit einer der Messvorrichtungen der Fig. 1 bis Fig. 6,

Fig. 8      eine zweite Ausführungsvariante einer Sender-Empfänger-Einheit einer der Messvorrichtungen der Fig. 1 bis Fig. 6, und

Fig. 9      eine Draufsicht auf eine Messvorrichtung zur Vermessung eines Prüfobjekts gemäß einem dritten Ausführungsbeispiel.

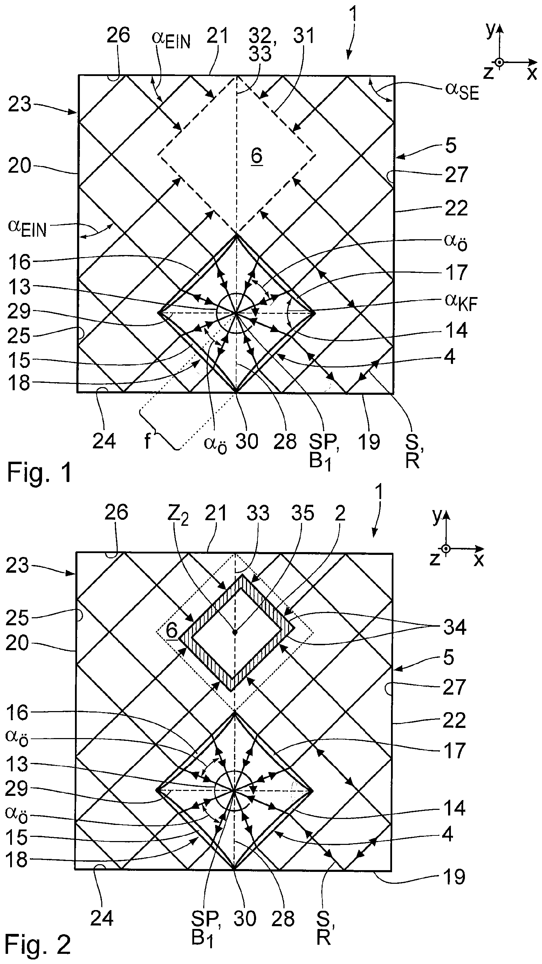

Nachfolgend ist anhand Fig. 1 und Fig. 2 ein erstes Ausführungsbeispiel der Erfindung beschrieben. Eine Messvorrichtung 1 weist zur Vermessung eines Prüfobjekts 2 eine Sender-Empfänger-Einheit 3, eine erste Kollimator-Fokussier-Anordnung 4, eine Spiegel-Anordnung 5, einen Prüfobjektaufnahmebereich 6 und eine Steuereinheit 7 auf.

Die Messvorrichtung 1 nach den Fig. 1 und Fig. 2 dient insbesondere zur Vermessung von Prüfobjekten 2 mit rechteckförmigem Querschnitt. Das Prüfobjekt 2, welches in Fig. 2 dargestellt ist, weist eine hohlrechteckförmige Kontur auf.

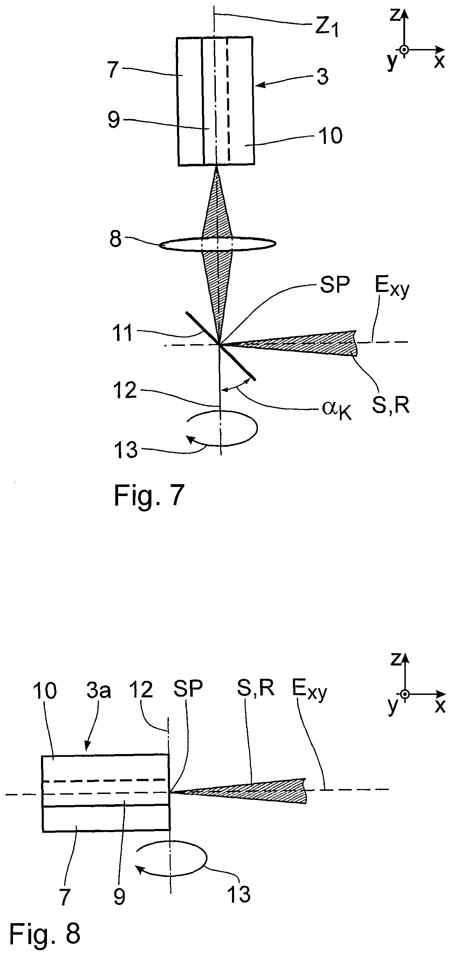

Aus Gründen der Übersichtlichkeit ist in Fig. 1 und Fig. 2 keine Sender-Empfänger-Einheit dargestellt. In der gezeigten Ausführungsvariante gemäß Fig. 1 und Fig. 2 der Messvorrichtung 1 findet die Sender-Empfänger-Einheit 3 gemäß Fig. 7 Anwendung. Es ist alternativ auch möglich, die Sender-Empfänger-Einheit 3a gemäß Fig. 8 in der Messvorrichtung 1 anzuwenden, ohne dass sich die grundsätzliche Funktionsweise der Messvorrichtung 1 ändert. Fig. 7 und Fig. 8 zeigen im Detail mögliche Ausführungsvarianten der Sender-Empfänger-Einheit 3 bzw. 3a.

Beide Ausführungsvarianten der Sender-Empfänger-Einheit 3 bzw. 3a umfassen jeweils einen Sender 9 zum emittieren von Strahlung S in einer x-y-Ebene $E_{xy}$ ausgehend von einem Strahlpunkt SP. Die emittierte Strahlung wird von dem Sender 9 bis zu dem Prüfobjekt 2 nachfolgend mit S bezeichnet. Die an dem Prüfobjekt 2 reflektierte Strahlung wird nachfolgend von dem Prüfobjekt 2 bis zu einem Empfänger 10 mit R bezeichnet. Der Empfänger 10 dient zum Detektieren der an dem Prüfobjekt 2 reflektierten Strahlung R. Zur Vermessung des Prüfobjekts 2 wird mittels der Steuereinheit 7 die detektierte Strahlung R ausgewertet.

Bei der Ausführungsvariante der Sender-Empfänger-Einheit 3 gemäß Fig. 7 sind der Sender 9 und der Empfänger 10 in einer z-Richtung beabstandet zu der x-y-Ebene $E_{xy}$ angeordnet. Der Sender 9 und der Empfänger 10 sind entlang einer ersten z-Achse $Z_1$ angeordnet, die parallel zu der z-Richtung durch den Strahlpunkt SP verläuft. Die Sender-Empfänger-Einheit 3 ist derart ausgebildet, dass die emittierte Strahlung R in der x-y-Ebene $E_{xy}$ um den Strahlpunkt SP rotierbar ist. Zu diesem Zweck weist die Sender-Empfänger-Einheit 3 einen Rotations-Spiegel 11 auf, der um eine senkrecht zur x-y-Ebene $E_{xy}$ durch den Strahlpunkt SP verlaufende Rotationsachse 12 rotierbar ist. Die Rotationsachse 12 fällt mit der ersten z-Achse $Z_1$ zusammen. Der Rotations-Spiegel 11 ist um einen Kipp-Winkel $\alpha_\kappa$ von 45° gegen die x-y-Ebene $E_{xy}$ gekippt. Bei der Rotationsbewegung des Rotationsspiegels 11 um die Rotationsachse 12 handelt es sich vorteilhafterweise um eine kontinuierliche Drehbewegung entlang einer Drehrichtung. Die Drehrichtung ist in Fig. 7 durch den Richtungspfeil 13 veranschaulicht.

Der Sender 9 und der Empfänger 10 sind in der gezeigten Ausführungsvariante der Sender-Empfänger-Einheit 3 gemäß Fig. 7 unbeweglich angeordnet. Die vom Sender 9 emittierte Strahlung S wird aus z-Richtung kommend mittels eines Fokussier-Mittels 8 auf den Strahlpunkt SP fokussiert. Der Rotations-Spiegel 11 lenkt die Strahlung S aus der z-Richtung kommend in die x-y-Ebene $E_{xy}$, wobei die Strahlung S durch den Rotations-Spiegel 11 um 360° um die Rotationsachse 12 rotiert. Dieser Aufbau der Sender-Empfänger-Einheit 3 ist einfach umzusetzen, stabil und nimmt wenig Platz ein, sodass auch Aufbauten mit kleinen maximalen Durchmessern des Prüfobjekts 2 umsetzbar sind. Zur Vermessung des Prüfobjekts 2 ist die Sender-Empfänger-Einheit 3 derart ausgebildet, dass die elektromagnetische Strahlung S, R mit einer Frequenz im Bereich von 0,01 THz bis 50 THz, insbesondere von 0,05 THz bis 20 THz, und insbesondere von 0,1 THz bis 10 THz emittierbar bzw. detektierbar ist. Vorzugsweise wird die Strahlung S pulsförmig emittiert, also THz-Pulse erzeugt.

Gemäß der alternativen Ausführungsvariante der Sender-Empfänger-Einheit 3a gemäß Fig. 8 ist im Unterschied zur Sender-Empfänger-Einheit 3 nach Fig. 7 kein Rotations-Spiegel vorgesehen. Die Sender-Empfänger-Einheit 3a ist derart gestaltet, dass sie im Strahlpunkt SP als Ganzes um die Rotationsachse 12 rotierbar ist. Der Sender 9 und der Empfänger 10 sind also beweglich. Bei der Rotationsbewegung der Sender-Empfänger-Einheit 3a um die Rotationsachse 12 handelt es sich vorteilhafterweise um eine kontinuierliche Drehbewegung entlang der Drehrichtung 13. Zur Verbindung optischer und elektrischer Signale zu der Sender-Empfänger-Einheit 3a ist eine nicht dargestellte Drehkupplung vorgesehen.

Beide Ausführungsvarianten der Sender-Empfänger-Einheiten 3, 3a sind in der erfindungsgemäßen Messvorrichtung 1 verwendbar, ohne dass sich die erfindungsgemäße Funktionsweise der Messvorrichtung 1 ändert.

Die erste Kollimator-Fokussier-Anordnung 4 umfasst Kollimator-Fokussier-Elemente 14, 15, 16, 17 zur Umformung der emittierten Strahlung S in kollimierte Strahlung S und zur Fokussierung der reflektierten Strahlung R in den Strahlpunkt SP. In der gezeigten Ausführungsvariante der Messvorrichtung 1 nach den Fig. 1 und Fig. 2 sind vier Kollimator-Fokussier-Elemente 14, 15, 16, 17 vorgesehen. Die Kollimator-Fokussier-Elemente 14, 15, 16, 17 sind derart angeordnet, dass jeweils zwei benachbarte Kollimator-Fokussier-Elemente 14, 15, 16, 17 in der x-y-Ebene $E_{xy}$ einen Winkel $\alpha_{KF}$ von 90° einschließen, sodass die Kollimator-Fokussier-Elemente 14, 15, 16, 17 in der x-y-Ebene $E_{xy}$ ein Kollimator-Fokussier-Quadrat 18 bilden. Durch die quadratische Gestalt umfasst die erste Kollimator-Fokussier-Anordnung 4 eine erste Kollimator-Fokussier-Diagonale 28 und eine zweite Kollimator-Fokussier-Diagonale 29.

Die Kollimator-Fokussier-Elemente 14, 15, 16, 17 sind als Linsen ausgebildet. Der Einfachheit halber werden in Bezug auf die Messvorrichtung 1 die Kollimator-Fokussier-Elemente 14, 15, 16, 17 daher als Linsen bezeichnet.

Die Linsen 14, 15, 16, 17 sind jeweils im Strahlengang zwischen dem Strahlpunkt SP und der Spiegel-Anordnung 5 angeordnet. Die einfallende emittierte Strahlung S wird mittels der Linsen 14, 15, 16, 17 in der x-y-Ebene $E_{xy}$ kollimiert. Konkret bedeutet dies, dass die in einem Quadranten des Kollimator-Fokussier-Quadrats 18 ausgesandten Strahlengänge nach den Linsen 14, 15, 16, 17 parallel zueinander verlaufen. Durch die Rotation der emittierten Strahlung S in der x-y-Ebene $E_{xy}$ um die Rotationsachse 12 sind in jedem Quadranten des Kollimator-Fokussier-Quadrats 18 Strahlengänge ausstrahlbar und durch die Linsen 14, 15, 16, 17 kollimierbar.

Die Linsen 14, 15, 16, 17 sind in Form und Größe identisch ausgebildet. Ein gemeinsamer Brennpunkt $B_1$ der Linsen in der x-y-Ebene $E_{xy}$ liegt im Strahlpunkt SP. Hierzu sind die Linsen 14, 15, 16, 17 als plankonvexe Sammellinsen ausgebildet, deren konvexe Wölbung jeweils in Richtung Strahlpunkt SP gerichtet ist. Die planen Seiten der Linsen 14, 15, 16, 17 bilden Kanten des Kollimator-Fokussier-Quadrats 18.

In der gezeigten Ausführungsvariante haben die Linsen 14, 15, 16, 17 jeweils die numerische Apertur 0,71. Ein Linsendurchmesser der Linsen 14, 15, 16, 17 beträgt in der gezeigten Ausführungsvariante 2f, wobei f eine Brennweite der Linsen 14, 15, 16, 17 bezeichnet. Folglich hat das Kollimator-Fokussier-Quadrat 18 Kantenlängen von 2f.

Die Spiegel-Anordnung 5 umfasst in der gezeigten Ausführungsvariante vier Spiegel-Elemente 19, 20, 21, 22 zum Umlenken der emittierten kollimierten Strahlung S und der reflektierten Strahlung R zwischen der Kollimator-Fokussier-Anordnung 4 und dem Prüfobjektaufnahmebereich 6. Der Prüfobjektaufnahmebereich 6 zur Anordnung des Prüfobjekts 2 liegt in der x-y-Ebene $E_{xy}$. Die Spiegel-Elemente 19, 20, 21, 22 sind derart angeordnet, dass zwei benachbarte Spiegel-Elemente 19, 20, 21, 22 einen Winkel $\alpha_{SE}$ von 90° einschließen, sodass die Spiegel-Elemente 19, 20, 21, 22 in der x-y-Ebene $E_{xy}$ ein Spiegel-Rechteck 23 bilden. In der Ausführungsvariante der Messvorrichtung 1 nach den Fig. 1 und Fig. 2 ist das Spiegel-Rechteck 23 als Spiegel-Quadrat ausgebildet, wobei die Spiegel-Elemente 19, 20, 21, 22 in Form und Größe identisch ausgebildet sind. In der gezeigten Ausführungsvariante hat das Spiegel-Rechteck 23 Kantenlängen von $4\sqrt{2}\ f$.

Wie aus Fig. 1 und Fig. 2 ersichtlich umgibt das Spiegel-Rechteck 23 das Kollimator-Fokussier-Quadrat 18 in der x-y-Ebene $E_{xy}$. Spiegel-Flächen 24, 25, 26, 27 der Spiegel-Elemente 19, 20, 21, 22 sind dabei parallel zu den Kollimator-Fokussier-Diagonalen 28, 29 des Kollimator-Fokussier-Quadrats 18 angeordnet.

Nach Kollimation der emittierten Strahlung S durch die Kollimator-Fokussier-Anordnung 4 wird es durch die Gestaltung der Spiegel-Anordnung 5 ermöglicht, dass jeder Strahlengang der kollimierten Strahlung S zweifach reflektiert wird. Hierzu ist die Spiegel-Anordnung 5 derart ausgebildet, dass ein erstes der Spiegel-Elemente 19, 20, 21, 22 die kollimierte Strahlung S auf ein zweites der Spiegel-Elemente 19, 20, 21, 22 umlenkt, wobei das zweite der Spiegel-Elemente 19, 20, 21, 22 die Strahlung S auf den Prüfobjektaufnahmebereich 6 umlenkt. Die Spiegel-Anordnung 5 ist ferner derart ausgebildet, dass die kollimierte Strahlung S jeweils unter einem Einfalls-Winkel $\alpha_{EIN}$ von im Wesentlichen 45° auf das jeweils erste und zweite der Spiegel-Elemente 19, 20, 21, 22 auftrifft. Durch welche Spiegel-Elemente 19, 20, 21, 22 eine Umlenkung der kollimierten Strahlung S stattfindet, hängt davon ab, in welchem Quadranten des Kollimator-Fokussier-Quadrats 18 die Strahlung S emittiert wurde.

In der Ausführungsvariante nach Fig. 1 und Fig. 2 sind die zweite Spiegel-Fläche 25 und die vierte Spiegel-Fläche 27 parallel zueinander und symmetrisch bezüglich der ersten Kollimator-Fokussier-Diagonalen 28 angeordnet. Entsprechend sind die erste Spiegel-Fläche 24 und die dritte Spiegel-Fläche 26 parallel zueinander und symmetrisch bezüglich der zweiten Kollimator-Fokussier-Diagonalen 29 angeordnet. Die erste Kollimator-Fokussier-Diagonale 28 fällt ferner mit einer Seitenhalbierenden 33 des als Spiegel-Quadrats ausgebildeten Spiegel-Rechtecks 23 zusammen. Ferner grenzt eine durch die erste Linse 14 und die zweite Linse 15 gebildete Linsenkante 30 an der ersten Spiegel-Fläche 24 an.

Die Messvorrichtung 1 ist derart gestaltet, dass die kollimierte Strahlung S nach den Reflexionen an der Spiegel-Anordnung 5 zum Prüfobjektaufnahmebereich 6 gelangt. Der Prüfobjektaufnahmebereich 6 erstreckt sich in der x-y-Ebene E_{xy} in der Form eines Prüfobjektaufnahme-Quadrats 31. Eine Kantenlänge des Prüfobjektaufnahme-Quadrats 31 entspricht der Kantenlänge des Kollimator-Fokussier-Quadrats 18 und entspricht der doppelten Brennweite f der Linsen 14, 15, 16, 17. Eine erste Prüfobjektaufnahme-Quadrat-Diagonale 32 fällt mit der selben Seitenhalbierenden 33 des Spiegel-Rechtecks 23 zusammen wie die erste Kollimator-Fokussier-Diagonale 28. Das Prüfobjektaufnahme-Quadrat 31 und das Kollimator-Fokussier-Quadrat 18 sind entlang der Seitenhalbierenden 33 benachbart zueinander angeordnet und füllen diese genau aus. Das heißt eine Summe der Längen der ersten Prüfobjektaufnahme-Quadrat-Diagonalen 32 und der ersten Kollimator-Fokussier-Diagonalen 28 entspricht einer Länge der Seitenhalbierenden 33 des Spiegel-Rechtecks 23.

Wie in Fig. 2 veranschaulicht, ist das Prüfobjekt 2 zur Vermessung innerhalb des Prüfobjektaufnahme-Quadrats 31 angeordnet. Zu detektierende Profilwände 34 des hohlrechteckförmigen Prüfobjekts 2 sind dabei parallel zu den Kanten des Prüfobjektaufnahme-Quadrats 31 ausgerichtet. So wird ermöglicht, dass die kollimierte Strahlung S senkrecht zu den Profilwänden 34 einfällt und die reflektierte Strahlung R entlang der selben Strahlengänge in entgegengesetzte Richtung zurück zum Strahlpunkt SP läuft, wo sie durch den Empfänger 10 detektierbar ist. Das Prüfobjektaufnahme-Quadrat 31 stellt einen maximalen Detektionsbereich dar. Liegt ein Profilquerschnitt eines Prüfobjekts 2 komplett im Prüfobjektaufnahme-Quadrat 31 sind alle Profilwände, welche parallel zu Kanten des Prüfobjektaufnahme-Quadrats 31 verlaufen, in vollem Umfang prüfbar.

Die Funktionsweise der Messvorrichtung 1 ist wie folgt:

Der Sender 9 emittiert Strahlung S in Form von THz-Pulsen. Die Erzeugung von THz-Pulsen ist grundsätzlich bekannt. THz-Pulse werden beispielsweise optisch mittels Femtosekunden-Laserpulsen und photoleitenden Schaltern erzeugt. Wie vorab unter Bezug auf Fig. 7 beschrieben, wird die Strahlung S in der z-Richtung emittiert und auf den Rotations-Spiegel 11 fokussiert.

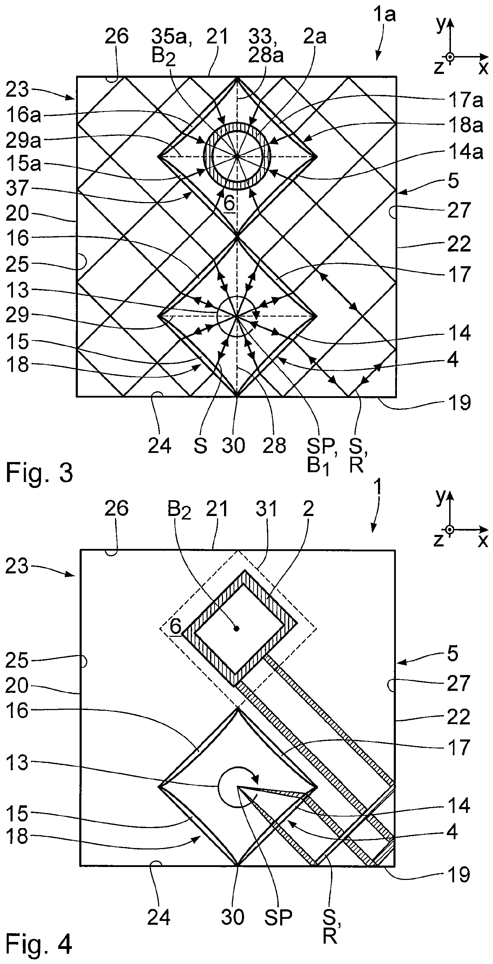

Durch Rotation des Rotations-Spiegels 11 um die Rotationsachse 12 wird erreicht, dass die emittierte Strahlung S in der x-y-Ebene E_{xy} um den Strahlpunkt SP rotiert. Jeder unter einem bestimmten Emissions-Winkel α_E emittierte Strahl tastet einen definierten Prüfbereich auf dem Prüfobjekt 2 ab. Exemplarisch sind in Fig. 1 und Fig. 2 mit durchgezogenen Linien ideale Strahlen eingezeichnet. Auf eine reale Strahlausbreitung wird später in Bezug auf Fig. 4, Fig. 5 und Fig. 6 eingegangen.

Die Gesamtheit der durch Rotation erzeugten und nacheinander vom Strahlpunkt SP auslaufenden Strahlung lässt sich in vier Strahlenbündel mit einem Öffnungswinkel ao von je 90° unterteilen. Jedem Strahlenbündel ist dabei ein Quadrant des Kollimator-Fokussier-Quadrats 18 zuordenbar.

In einem ersten Schritt wird die vom Strahlpunkt SP auslaufende divergente Strahlung mittels der Linsen 14, 15, 16, 17 der ersten Kollimator-Fokussier-Anordnung 4 kollimiert. Nach den Linsen 14, 15, 16, 17 verlaufen alle in einem Quadranten des Kollimator-Fokussier-Quadrats 18 ausgesandten Strahlen parallel zueinander. So entstehen vier kollimierte Strahlengänge.

Nach Kollimation durch die Kollimator-Fokussier-Anordnung 4 wird jeder Strahl zweifach durch die Spiegel-Anordnung 5 reflektiert. Die kollimierte Strahlung S trifft jeweils unter dem Einfall-Winkel α_{EIN} von 45° auf das jeweilige Spiegel-Element 19, 20, 21, 22 auf.

Beispielhaft trifft die durch die dritte Linse 16 kollimierte Strahlung unter dem Einfall-Winkel α_{EIN} von 45° auf das zweite Spiegel-Element 20 auf und wird dort durch die zweite Spiegel-Fläche 25 zum dritten Spiegel-Element 21 reflektiert, wo die kollimierte Strahlung S wiederum unter dem Einfall-Winkel α_{EIN} von 45° auftrifft. Die dritte Spiegel-Fläche 26 leitet die kollimierte Strahlung S zum Prüfobjektaufnahmebereich 6 weiter.

Nach den Reflexionen trifft die kollimierte Strahlung S senkrecht auf die Profilwände 34 des Prüfobjekts 2. Durch die Gestaltung der Messvorrichtung 1 werden die THz-Pulse von der Sender-Empfänger-Einheit 3 somit senkrecht auf das Prüfobjekt 2 eingestrahlt.

Wie zuvor beschrieben, wird eine Abstrahlrichtung der vom Strahlpunkt SP ausgehenden Strahlung S durch Rotation des Rotationsspiegels 11 variiert. In Fig. 1 und Fig. 2 ist eine Rotation der emittierten Strahlung S in Drehrichtung 13 dargestellt. Nacheinander stellen sich so verschiedene Strahlengänge ein, wobei die Profilwände 34 des Prüfobjekts 2 in Drehrichtung 13 um den Strahlpunkt SP nacheinander vollständig abgetastet werden. Die einzelnen Profilwände 34 des Prüfobjekts 2 werden nacheinander geprüft. Entlang der jeweiligen Profilwand 34 verläuft eine Bewegungsrichtung der Strahlung S jedoch entgegen der Drehrichtung 13, was insbesondere aus Fig. 2 ersichtlich ist.

Das Prüfobjekt 2 ist derart anzuordnen, dass dessen Mittellängsachse 35 entlang einer zweiten z-Achse Z_2 durch die x-y-Ebene E_{xy} im Prüfobjektaufnahmebereich 6 verläuft und eine Extrusionsrichtung des Prüfobjekts 2 parallel zur z-Achse ist.

Die am Prüfobjekt 2 reflektierte Strahlung R bzw. die reflektierten THz-Pulse laufen zumindest teilweise entlang der gleichen Strahlengänge zurück zu der Sender-Empfänger-Einheit 3. Die reflektierte Strahlung R wird mittels der Spiegel-Anordnung 5 wieder zweimal reflektiert und in Richtung des Empfängers 10 umgelenkt. Die Kollimator-Fokussier-Anordnung 4 fokussiert die reflektierte Strahlung R im gemeinsamen Brennpunkt $B_1$ der ersten Kollimator-Fokussier-Anordnung 4. Der Empfänger 10 detektiert die fokussierte Strahlung R. Der Aufbau des Empfängers 10 ist grundsätzlich bekannt. THz-Pulse werden beispielsweise durch optisches Abtasten (Sampling) mit Femtosekunden-Laserpulsen detektiert. Die detektierte Strahlung R wird durch die Steuereinheit 7 ausgewertet.

Durch die erfindungsgemäße Messvorrichtung 1 ist das hohlrechteckförmige Prüfobjekt 2 in vollem Umfang abtastbar und vermessbar, ohne dass eine Drehung des Prüfobjekts 2 um dessen Mittellängsachse 35 oder eine Translationsbewegung des Prüfobjekts notwendig sind. Dies ist besonders vorteilhaft, wenn eine Vermessung des Prüfobjekts 2 während eines Extrusionsprozesses erfolgt. Eine Vermessung des Prüfobjekts 2 kann daher inline erfolgen. Eine vollumfängliche Messung des Prüfobjekts 2 ist mit nur einer Sender-Empfänger-Einheit 3 erreichbar.

In Fig. 4 ist ferner eine reale Strahlausbreitung der Strahlung S, R eingezeichnet. Die Strahlung S wird dabei wie vorab beschrieben mittels der Sender-Empfänger-Einheit 3 emittiert. Die emittierte Strahlung S weist eine Strahldivergenz auf. Die Strahlung S, R weist einen Divergenzwinkel $\Delta\alpha_R$ in der x-y-Ebene $E_{xy}$ auf. Durch den Divergenzwinkel $\Delta\alpha_R$ ist die Strahlung S, die auf die Linsen 14, 15, 16, 17 trifft, einstellbar und somit auch ein Durchmesser der kollimierten Strahlung S. Die kollimierte Strahlung S trifft bei einer realen Strahlausbreitung nicht punktförmig auf das Prüfobjekt 2, sondern in einem Messbereich. Die Größe des Messbereichs hängt von dem Divergenzwinkel $\Delta\alpha_R$ ab. Trotz der divergenten Strahlausbreitung trifft die Strahlung S bzw. der jeweilige THz-Puls senkrecht auf die Profilwände 34 des Prüfobjekts 2, und zu den zu gleichen Zeitpunkten. Hierdurch wird gewährleistet, dass die reflektierte Strahlung R eine hohe Signalqualität aufweist und insbesondere die reflektierten THz-Pulse nicht verwaschen und in ihrer Amplitude abgeschwächt sind.

Nachfolgend ist anhand Fig. 3 ein zweites Ausführungsbeispiel der Erfindung beschrieben. Im Unterschied zur Messvorrichtung 1 der ersten Ausführungsvariante dient die Messvorrichtung 1a insbesondere zur Vermessung von Prüfobjekten 2a mit hohlzylinderförmigem Querschnitt. Bauteile der Messvorrichtung 1a, welche mit Teilen der ersten Ausführungsvariante der Messvorrichtung 1 identisch sind, erhalten die selben Bezugszeichen.

Die Sender-Empfänger-Einheit 3, die erste Kollimator-Fokussier-Anordnung 4 und die Spiegel-Anordnung 5 der Messvorrichtung 1a sind identisch ausgebildet zur Messvorrichtung 1. Im Unterschied zum ersten Ausführungsbeispiel umfasst die Messvorrichtung 1a eine zweite Kollimator-Fokussier-Anordnung 37 zur Fokussierung der mittels der ersten Kollimator-Fokussier-Anordnung 4 kollimierten Strahlung S in einen gemeinsamen Prüfobjekt-Brennpunkt $B_2$ und zur Umformung der reflektierten Strahlung R in reflektierte kollimierte Strahlung R.

Die zweite Kollimator-Fokussier-Anordnung 37 ist im Prüfobjektaufnahmebereich 6 konzentrisch zum Prüfobjekt-Brennpunkt $B_2$ angeordnet. Die zweite Kollimator-Fokussier-Anordnung 37 ist identisch zur ersten Kollimator-Fokussier-Anordnung 4 ausgebildet und umfasst entsprechend vier als plankonvexe Linsen 14a, 15a, 16a, 17a ausgebildete Kollimator-Fokussier-Elemente. Entsprechend bilden auch die Linsen 14a, 15a, 16a, 17a der zweiten Kollimator-Fokussier-Anordnung 37 ein Kollimator-Fokussier-Quadrat 18a. Das Kollimator-Fokussier-Quadrat 18a umfasst eine erste Kollimator-Fokussier-Diagonale 28a und eine zweite Kollimator-Fokussier-Diagonale 29a. Die zweite Kollimator-Fokussier-Anordnung 37 ist derart im Prüfobjektaufnahmebereich 6 angeordnet, dass die erste Kollimator-Fokussier-Diagonale 28a der zweiten Kollimator-Fokussier-Anordnung 37 mit der Seitenhalbierenden 33 des als Quadrat ausgebildeten Spiegel-Rechtecks 23 zusammenfällt. Vereinfacht gesagt, ist die zweite Kollimator-Fokussier-Anordnung 37 in der x-y-Ebene $E_{xy}$ deckungsgleich mit dem in Zusammenhang mit den Fig. 1 und Fig. 2 beschriebenen Prüfobjektaufnahme-Quadrat 31 ausgebildet.

Die Funktionsweise der Messvorrichtung 1a ist wie folgt:

Nach Bereitstellung der Messvorrichtung 1a wird das hohlzylinderförmige, als Rohr ausgebildete Prüfobjekt 2a derart im Prüfobjektaufnahmebereich 6 angeordnet, dass eine Mittellängsachse 35a durch den Prüfobjekt-Brennpunkt $B_2$ läuft und eine Extrusionsrichtung des Prüfobjekts 2a parallel zur z-Achse ist bzw. senkrecht zur x-y-Ebene $E_{xy}$. Anschließend wird wie vorab im Zusammenhang mit Fig. 1 und Fig. 2 beschrieben, rotierende THz-Strahlung S durch den Sender 9 emittiert und durch die erste Kollimator-Fokussier-Anordnung 4 kollimiert. Anschließend wird mittels der Spiegel-Anordnung 5 die kollimierte Strahlung S zum Prüfobjektaufnahmebereich 6 umgelenkt. Die senkrecht auf die Linsen 14a, 15a, 16a, 17a einfallende Strahlung S wird durch die zweite Kollimator-Fokussier-Anordnung 37 auf den Prüfobjekt-Brennpunkt $B_2$ fokussiert. Dies hat zur Folge, dass die THz-Strahlung S senkrecht zur Oberfläche des hohlzylinderförmigen Prüfobjekts 2a, also radial zur selbigen einfällt. Dies ermöglicht, dass die reflektierte Strahlung R entlang der gleichen Strahlengänge in entgegengesetzter Richtung zurück zum Strahlpunkt SP läuft, wo sie durch den Empfänger 10 detektiert wird.

In der gezeigten Ausführungsvariante der Messvorrichtung 1a beträgt ein maximaler detektierbarer Rohrdurchmesser des Prüfobjekts 2a 2(f-p) wobei p eine maximale Dicke der Linsen 14a, 15a, 16a, 17a beschreibt. Idealerweise ist die Linsendicke p deutlich kleiner als die Brennweite f.

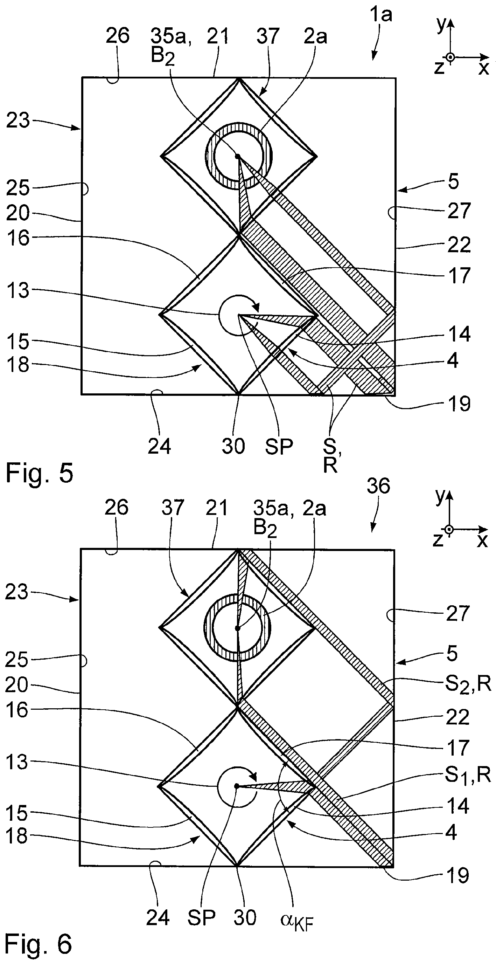

In Fig. 5 und Fig. 6 ist ferner eine reale Strahlausbreitung der Strahlung S, R im Zusammenhang mit der zweiten Ausführungsvariante der Messvorrichtung 1a gezeigt. Wie erläutert, wird im Rahmen der Vermessung des hohlzylinderförmigen Prüfobjekts 2a die kollimierte THz-Strahlung S durch die Linsen 14a, 15a, 16a, 17a fokussiert und auf das Prüfobjekt 2a gerichtet. Ein Fokuspunkt liegt jedoch nicht auf dem Prüfobjekt 2a sondern im Prüfobjekt-Brennpunkt $B_2$. Hierdurch trifft jeder Punkt einer einfallenden Wellenfront eines THz-Pulses zeitgleich und senkrecht auf das konzentrisch zum Prüfobjekt-Brennpunkt $B_2$ angeordnete Prüfobjekt 2a. Hierdurch wird die THz-Strahlung S unabhängig von einem Rohrdurchmesser immer ideal reflektiert. Somit ist eine Detektionsgeometrie optimal auf eine Geometrie des Prüfobjekts 2a ausgelegt. Die auf dem Prüfobjekt-Brennpunkt $B_2$ einfallende Strahlung S und die vom Strahlpunkt SP ausgehende Strahlung S weisen den gleichen Divergenzwinkel $\Delta\alpha_R$ auf, wobei der Divergenzwinkel $\Delta\alpha_R$ unabhängig von einer Abstrahlungsrichtung ist.

In Fig. 6 ist die Messvorrichtung 1a gezeigt, wobei emittierte Strahlung S auf eine Kante des Kollimator-Fokussier-Quadrats 18 trifft, an der die vierte Linse 17 und die erste Linse 14 unter Bildung des Winkels $\alpha_{KF}$ von 90° zusammenfallen. Die betrachtete Strahlung S trifft also auf zwei Linsen 14, 17 und wird aufgespalten, sodass Teilstrahlungen S1 bzw. S2 gebildet werden, welche zwei Messbereiche auf dem Prüfobjekt 2a ausbilden. Wie Fig. 6 zu entnehmen, werden in diesem speziellen Fall zwei nahezu gegenüberliegende Bereiche des Prüfobjekts 2a abgetastet. Ein Messsignal setzt sich so aus Reflexionen in diesen beiden Bereichen zusammen. Eine Überlagerung der Messsignale gibt Aufschluss über die Positionierung des Prüfobjekts 2a im Aufbau. Fallen die Reflexionen zusammen, so ist das Prüfobjekt 2a zentriert. Fallen die Reflexionen nicht zusammen, ist einer der Messbereiche näher an einer der Linsen 14a, 15a, 16a, 17a. Da der THz-Strahl S die Ecke des Kollimator-Fokussier-Quadrats 18 überstreicht, ändert sich das Verhältnis der Stärke der beiden Reflexionen in aufeinanderfolgenden Messungen. Somit kann jede der beiden Signalkomponenten eindeutig auf die Reflexion von einem Bereich zurückgeführt werden.

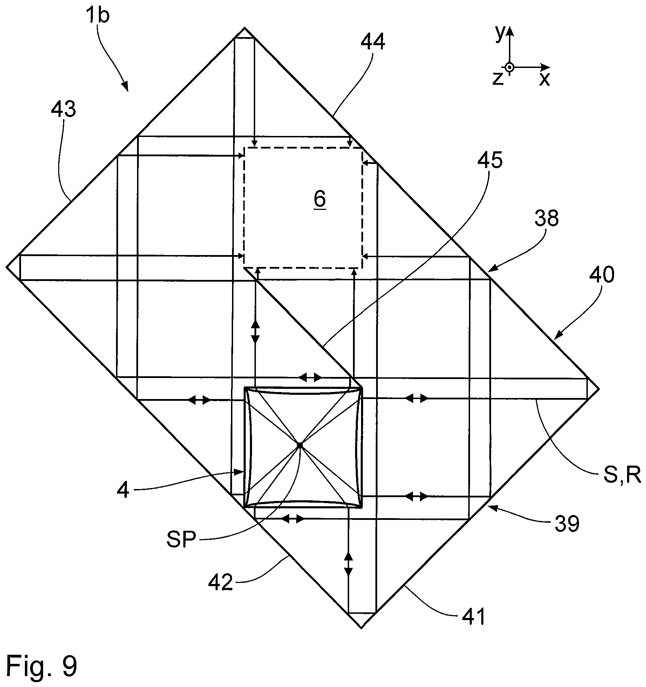

Nachfolgend ist anhand Fig. 9 ein drittes Ausführungsbeispiel der Erfindung beschrieben. Eine Messvorrichtung 1b gemäß der dritten Ausführungsvariante weicht von den Messvorrichtungen 1, 1a in erster Linie durch die Gestaltung einer Spiegelanordnung 39 ab. Die Spiegel-Anordnung 39 ist rechteckförmig als Spiegel-Rechteck 40 ausgebildet. Das Spiegel-Rechteck 40 umfasst vier Spiegel-Elemente 41, 42, 43, 44, welche zusammen das Spiegel-Rechteck 40 bilden. Zusätzlich umfasst die Spiegel-Anordnung 39 ein fünftes Spiegel-Element 45, welcher innerhalb des Spiegel-Rechtecks 40 angeordnet ist. Die einander gegenüberliegenden Spiegel-Elemente 41, 43 sind in Form und Größe identisch ausgebildet. Entsprechend sind die einander gegenüberliegenden Spiegel-Elemente 42, 44 in Form und Größe identisch ausgebildet. Die Spiegel-Elemente 41, 43 unterscheiden sich jedoch hinsichtlich einer Kantenlänge von den Spiegel-Elemente 42, 44. Das fünfte Spiegel-Element 45 verläuft jeweils parallel zu den Spiegel-Elementen 42, 44 zwischen denselbigen. Bei dem Aufbau gemäß Fig. 9 wird die Strahlung S zwischen der ersten Kollimator-Fokussier-Anordnung 4 und dem Prüfobjektaufnahmebereich 6 dreimal reflektiert. Dabei beträgt eine Länge des Strahlengangs 10f. Hinsichtlich des weiteren Aufbaus und der weiteren Funktionsweise wird auf das erste Ausführungsbeispiel verwiesen.

Grundsätzlich ist es in weiteren alternativen Ausführungsvarianten auch vorstellbar, mehr als zwei oder drei Reflexionen zwischen erster Kollimator-Fokussier-Anordnung 4 und Prüfobjektaufnahmebereich 6 vorzusehen. Ferner ist es prinzipiell auch möglich, dass die erste Kollimator-Fokussier-Anordnung 4 und/oder die zweite Kollimator-Fokussier-Anordnung 37 als Kollimator-Fokussier-Polygone mit mehr als vier Ecken ausgeführt sind. Ein Großteil von zu vermessenden Prüfobjekten weist jedoch Kanten auf, welche rechtwinklig zueinander sind. Daher bilden insbesondere die Ausführungsvarianten der Messvorrichtung 1 und der Messvorrichtung 1b bevorzugte Lösungen.

**Patentansprüche**

1. Messvorrichtung zur Vermessung von Prüfobjekten mit

- einer Sender-Empfänger-Einheit (3; 3a) mit

-- einem Sender (9) zum Emittieren von Terahertz-Strahlung (S) in einer x-y-Ebene ($E_{xy}$) ausgehend von einem Strahlpunkt (SP) und

-- einem zugehörigen Empfänger (10) zum Detektieren einer an einem Prüfobjekt (2; 2a) reflektierten Terahertz-Strahlung (R),

- einer ersten Kollimator-Fokussier-Anordnung (4)

-- mit Kollimator-Fokussier-Elementen (14, 15, 16, 17) zur Umformung der emittierten Terahertz-Strahlung (S) in kollimierte Strahlung und zur Fokussierung der reflektierten Terahertz-Strahlung (R) in den Strahlpunkt (SP),

-- wobei die Kollimator-Fokussier-Elemente (14, 15, 16, 17) derart angeordnet sind, dass zwei benachbarte Kollimator-Fokussier-Elemente (14, 15, 16, 17) in der x-y-Ebene ($E_{xy}$) einen Winkel ($\alpha_{KF}$) von 90° einschließen, sodass die Kollimator-Fokussier-Elemente (14,15, 16, 17) ein Kollimator-Fokussier-Quadrat (18) bilden,
-- wobei ein gemeinsamer Brennpunkt ($B_1$) der Kollimator-Fokussier-Elemente (14, 15, 16, 17) in der x-y-Ebene ($E_{xy}$) im Strahlpunkt (SP) liegt,

- einem in der x-y-Ebene ($E_{xy}$) liegendem Prüfobjektaufnahmebereich (6) zur Anordnung des Prüfobjekts (2; 2a),
- mindestens einer Spiegel-Anordnung (5; 39)

-- mit Spiegel-Elementen (19, 20, 21, 22; 41, 42, 43, 44) zum Umlenken der kollimierten Terahertz-Strahlung (S) und der reflektierten Terahertz-Strahlung (R) zwischen der Kollimator-Fokussier-Anordnung (4) und dem Prüfobjektaufnahmebereich (6),
-- wobei die Spiegel-Elemente (19, 20, 21, 22; 41, 42, 43, 44) derart angeordnet sind, dass jeweils zwei Spiegel-Elemente (19, 20, 21, 22; 41, 42, 43, 44) in der x-y-Ebene ($E_{xy}$) einen Winkel ($\alpha_{SE}$) von 90° einschließen, sodass die Spiegel-Elemente (19, 20, 21, 22; 41, 42, 43, 44) ein Spiegel-Rechteck (23; 40) bilden,
-- wobei Spiegel-Flächen (24, 25, 26, 27) des Spiegel-Rechtecks (23; 40) parallel zu einer der Kollimator-Fokussier-Diagonalen (28, 29) des Kollimator-Fokussier-Quadrats (18) sind,
-- wobei die Kollimator-Fokussier-Elemente (14,15,16, 17) innerhalb des Spiegel-Rechtecks (23, 40) liegen, und

- einer Steuereinheit (7) zur Auswertung der detektierten Terahertz-Strahlung (R).

2. Messvorrichtung nach Anspruch 1, **dadurch gekennzeichnet, dass** zwei benachbarte Kollimator-Fokussier-Elemente (14, 15, 16, 17) in der x-y-Ebene ($E_{xy}$) senkrecht zueinander stehen und weiterhin zwei benachbarte Spiegel-Elemente (19, 20, 21, 22; 41, 42, 43, 44) in der x-y-Ebene ($E_{xy}$) senkrecht zueinander stehen.

3. Messvorrichtung nach Anspruch 1 oder 2, **dadurch gekennzeichnet, dass** die Kollimator-Fokussier-Elemente (14, 15, 16, 17), insbesondere in Form und/oder Größe, identisch ausgebildet sind.

4. Messvorrichtung nach einem der vorstehenden Ansprüche, **dadurch gekennzeichnet, dass** die Kollimator-Fokussier-Elementen (14, 15, 16, 17) als Linsen ausgebildet sind.

5. Messvorrichtung nach einem der vorstehenden Ansprüche, **dadurch gekennzeichnet, dass** die Spiegel-Elemente (19, 20, 21, 22), insbesondere in Form und/oder Größe, identisch ausgebildet sind.

6. Messvorrichtung nach einem der vorhergehenden Ansprüche, **dadurch gekennzeichnet, dass** die Spiegel-Anordnung (5; 39) derart ausgebildet ist, dass ein erstes Spiegel-Element (19, 20, 21, 22; 41, 42, 43, 44) die kollimierte Strahlung (S) auf ein zweites Spiegel-Element (19, 20, 21, 22; 41, 42, 43, 44) umlenkt, wobei das zweite Spiegel-Element (19, 20, 21, 22; 41, 42, 43, 44) die Strahlung (S) auf den Prüfobjektaufnahmebereich (6) umlenkt.

7. Messvorrichtung nach Anspruch 6, **dadurch gekennzeichnet, dass** die Spiegel-Anordnung (5; 39) derart ausgebildet ist, dass die kollimierte Strahlung (S) jeweils unter einem Einfall-Winkel ($\alpha_{EIN}$) von 45° auf das erste Spiegel-Element (19, 20, 21, 22; 41, 42, 43, 44) und das zweite Spiegel-Element (19, 20, 21, 22; 41, 42, 43, 44) auftrifft.

8. Messvorrichtung nach einem der vorstehenden Ansprüche, **dadurch gekennzeichnet, dass** die Sender-Empfänger-Einheit (3; 3a) derart ausgebildet ist, dass die emittierte Strahlung (S) in der x-y-Ebene ($E_{-xy}$) um den Strahlpunkt (SP) rotierbar ist.

9. Messvorrichtung nach Anspruch 8, **dadurch gekennzeichnet, dass** die Sender-Empfänger-Einheit (3; 31) derart gestaltet ist, dass sie im Strahlpunkt (SP) um eine Rotationsachse (12) rotierbar angeordnet ist.

10. Messvorrichtung nach Anspruch 8, **dadurch gekennzeichnet, dass** die Sender-Empfänger-Einheit (3; 3a) einen Rotations-Spiegel (11) aufweist, der um eine senkrecht zur x-y-Ebene ($E_{xy}$) durch den Strahlpunkt (SP) verlaufende Rotationsachse (12) rotierbar ist.

11. Messvorrichtung nach Anspruch 10, **dadurch gekennzeichnet, dass** der Rotations-Spiegel (11) um einem Kipp-Winkel ($\alpha_K$) von 45° gegen die x-y-Ebene ($E_{xy}$) gekippt ist.

12. Messvorrichtung nach einem der vorhergehenden Ansprüche, **dadurch gekennzeichnet, dass** im Prüfobjektaufnahmebereich (6) eine zweite Kollimator-Fokussier-Anordnung (37) konzentrisch zu einem Prüfobjekt-Brennpunkt ($B_2$) angeordnet ist.

13. Messvorrichtung nach Anspruch 12, **dadurch gekennzeichnet, dass** die erste Kollimator-Fokussier-Anordnung (4) und die zweite Kollimator-Fokussier-Anordnung (37) identisch ausgebildet sind.

14. Messvorrichtung nach Anspruch 12 oder 13, **dadurch gekennzeichnet, dass** je eine Kollimator-Fokussier-Diagonale (28; 32) der ersten Kollimator-Fokussier-Anordnung (4) und der zweiten Kollimator-Fokussier-Anordnung (37) mit einer Seitenhalbierenden (33) des Spiegel-Rechtecks (23) zusammenfällt.

15. Messvorrichtung nach einem der vorherigen Ansprüche, **dadurch gekennzeichnet, dass** die Steuereinheit (6) ausgebildet ist zur Vermessung des Prüfobjekts mittels der Terahertz-Strahlung basierend auf der Messung einer Laufzeitdifferenz der Terahertz-Strahlung, die an Grenzschichten reflektiert wird, z. B. Rohraußenwand, Rohrinnenwand und aneinandergrenzende Materialschichten innerhalb des Prüfobjekts (2).

16. Verfahren zur Messung von Prüfobjekten (2, 2a), umfassend die Schritte:

- Bereitstellen einer Messvorrichtung (1; 1a; 1b) nach mindestens einem der Ansprüche 1 bis 14,
- Anordnen eines Prüfobjekts (2; 2a) derart, dass dessen Mittellängsachse (35; 35a) durch die x-y-Ebene ($E_{xy}$) im Prüfobjektaufnahmebereich (6) verläuft,
- Emittieren von Terahertz-Strahlung mittels des Senders (9),
- Kollimation der emittierten Terahertz-Strahlung (S) zur Umformung der emittierten Terahertz-Strahlung (S) in kollimierte Terahertz-Strahlung mittels der ersten Kollimator-Fokussier-Anordnung (4),
- Umlenken der kollimierten Terahertz-Strahlung (S) mittels der Spiegel-Anordnung (5; 39) zu dem Prüfobjektaufnahmebereich (6),- - Reflektieren der kollimierten Terahertz-Strahlung (S) an dem Prüfobjekt (2; 2a),
- Umlenken der reflektierten Terahertz-Strahlung (R) mittels der Spiegel-Anordnung (5; 39) in Richtung des Empfängers (10),
- Fokussieren der reflektierten Terahertz-Strahlung (R) mittels der ersten Kollimator-Fokussier-Anordnung (4) im gemeinsamen Brennpunkt ($B_1$) der Kollimator-Fokussier-Elemente (14, 15, 16, 17),
- Detektieren der fokussierten Terahertz-Strahlung (R) mittels dem Empfänger (10), und
- Auswerten der detektierten Terahertz-Strahlung (R).

17. Verfahren nach Anspruch 16, **dadurch gekennzeichnet, dass** die emittierte Terahertz-Strahlung (S) um den Strahlpunkt (SP) rotiert.

18. Verfahren nach Anspruch 16 oder 17, **dadurch gekennzeichnet, dass** die emittierte Terahertz-Strahlung (S) und die reflektierte Terahertz- Strahlung (R) zumindest teilweise den selben Strahlengang haben.

19. Verfahren nach einem der Ansprüche 16 bis 18 **dadurch gekennzeichnet, dass** ein Prüfobjekt (2) aus Kunststoff vermessen wird, indem eine Laufzeitdifferenz der Terahertz-Strahlung gemessen wird, die an Grenzschichten reflektiert wird, insbesondere Oberflächen des Prüfobjekts (2), z. B. einer Rohraußenwand und/oder Rohrinnenwand und/oder aneinandergrenzender Materialschichten innerhalb des Prüfobjekts (2).

## Claims

1. Measuring device for measuring test objects having

- a transmitter-receiver unit (3; 3a) having

- a transmitter (9) for emitting terahertz radiation (S) in an x-y plane ($E_{xy}$) starting from a beam point (SP) and
- an associated receiver (10) for detecting terahertz radiation (R) reflected at a test object (2; 2a),

- a first collimator-focussing arrangement (4)

- having collimator-focussing elements (14, 15, 16, 17) for transforming the emitted terahertz radiation (S) into collimated radiation and for focussing the reflected terahertz radiation (R) onto the beam point (SP),
- wherein the collimator-focussing elements (14, 15, 16, 17) are arranged in such a way that two adjacent collimator-focussing elements (14, 15, 16, 17) enclose an angle ($\alpha_{KF}$) of 90° in the x-y plane ($E_{xy}$), so that the collimator-focussing elements (14, 15, 16, 17) form a collimator-focussing square (18),
- wherein a common focal point ($B_1$) of the collimator-focussing elements (14, 15, 16, 17) in the x-y plane ($E_{xy}$) lies in the beam point (SP),

- a test object receiving area (6) lying in the x-y plane ($E_{xy}$) for positioning the test object (2; 2a),
- at least one mirror arrangement (5; 39)

- having mirror elements (19, 20, 21, 22; 41, 42, 43, 44) for deflecting the collimated terahertz radiation (S) and the reflected terahertz radiation (R) between the collimator-focussing arrangement (4) and the test object receiving area (6),
- wherein the mirror elements (19, 20, 21, 22; 41, 42, 43, 44) are arranged in such a way that in each case two mirror elements (19, 20, 21, 22; 41, 42, 43, 44) enclose an angle ($\alpha_{SE}$) of 90° in the x-y plane ($E_{xy}$), so that the mirror elements (19, 20, 21, 22; 41, 42, 43, 44) form a mirror rectangle (23; 40),
- wherein mirror surfaces (24, 25, 26, 27) of the mirror rectangle (23; 40) are parallel to one of the collimator-focussing diagonals (28, 29) of the collimator-focussing square (18),
- wherein the collimator-focussing elements (14, 15, 16, 17) lie within the mirror rectangle (23; 40), and

- a control unit (7) for evaluating the detected terahertz radiation (R).

2. Measuring device according to Claim 1, **characterised in that** two adjacent collimator-focussing elements (14, 15, 16, 17) are perpendicular to one another in the x-y plane ($E_{xy}$) and, in addition, two adjacent mirror elements (19, 20, 21, 22; 41, 42, 43, 44) are perpendicular to one another in the x-y plane ($E_{xy}$).

3. Measuring device according to Claim 1 or 2, **characterised in that** the collimator-focussing elements (14, 15, 16, 17) are formed identically, in particular in shape and/or size.

4. Measuring device according to any one of the preceding claims, **characterised in that** the collimator-focussing elements (14, 15, 16, 17) are formed as lenses.

5. Measuring device according to any one of the preceding claims, **characterised in that** the mirror elements (19, 20, 21, 22) are formed identically, in particular in shape and/or size.

6. Measuring device according to any one of the preceding claims, **characterised in that** the mirror arrangement (5; 39) is formed in such a way that a first mirror element (19, 20, 21, 22; 41, 42, 43, 44) deflects the collimated radiation (S) onto a second mirror element (19, 20, 21, 22; 41, 42, 43, 44), wherein the second mirror element (19, 20, 21, 22; 41, 42, 43, 44) deflects the radiation (S) onto the test object receiving area (6).

7. Measuring device according to Claim 6, **characterised in that** the mirror arrangement (5; 39) is formed in such a way that the collimated radiation (S) impinges on the first mirror element (19, 20, 21, 22; 41, 42, 43, 44) and the second mirror element (19, 20, 21, 22; 41, 42, 43, 44) at an angle of incidence ($\alpha_{EIN}$) of 45° in each case.

8. Measuring device according to any one of the preceding claims, **characterised in that** the transmitter-receiver unit (3; 3a) is formed in such a way that the emitted radiation (S) can be rotated about the beam point (SP) in the x-y plane ($E_{xy}$).

9. Measuring device according to Claim 8, **characterised in that** the transmitter-receiver unit (3; 31) is designed in such a way that it can be arranged rotatably about a rotational axis (12) in the beam point (SP).

10. Measuring device according to Claim 8, **characterised in that** the transmitter-receiver unit (3; 3a) has a rotational mirror (11) which can be rotated about a rotational axis (12) running perpendicular to the x-y plane ($E_{xy}$) through the beam point (SP).

11. Measuring device according to Claim 10, **characterised in that** the rotational mirror (11) is tilted about a tilt angle ($\alpha_K$) of 45° against the x-y plane ($E_{xy}$).

12. Measuring device according to any one of the preceding claims, **characterised in that** a second collimator-focussing arrangement (37) is arranged in the test object receiving area (6) concentrically to a test object focal point ($B_2$).

13. Measuring device according to Claim 12, **characterised in that** the first collimator-focussing arrangement (4) and the second collimator-focussing arrangement (37) are formed identically.

14. Measuring device according to Claim 12 or 13, **characterised in that** a respective collimator-focussing diagonal (28; 32) of the first collimator-focussing arrangement (4) and of the second collimator-focussing arrangement (37) coincides with a median line (33) of the mirror rectangle (23).

15. Measuring device according to any one of the preceding claims, **characterised in that** the control unit (6) is designed to measure the test object by means of the terahertz radiation based on the measurement of a delay time of the terahertz radiation which is reflected at boundary layers, e.g. pipe outer wall, pipe inner wall and abutting material layers within the test object (2).

16. Method for measuring test objects (2, 2a), comprising the steps:

- providing a measuring device (1; 1a; 1b) according to at least one of Claims 1 to 14,

- positioning a test object (2; 2a) in such a way that its central longitudinal axis (35; 35a) runs through the x-y plane ($E_{xy}$) in the test object receiving area (6),
- emitting terahertz radiation by means of the transmitter (9),
- collimating the emitted terahertz radiation (S) to transform the emitted terahertz radiation (S) into collimated terahertz radiation by means of the first collimator-focussing arrangement (4),
- deflecting the collimated terahertz radiation (S) by means of the mirror arrangement (5; 39) to the test object receiving area (6),
- reflecting the collimated terahertz radiation (S) at the test object (2; 2a),
- deflecting the reflected terahertz radiation (R) by means of the mirror arrangement (5; 39) in the direction of the receiver (10),
- focussing the reflected terahertz radiation (R) by means of the first collimator-focussing arrangement (4) in the common focal point ($B_1$) of the collimator-focussing elements (14, 15, 16, 17),
- detecting the focussed terahertz radiation (R) by means of the receiver (10) and
- evaluating the detected terahertz radiation (R).

17. Method according to Claim 16, **characterised in that** the emitted terahertz radiation (S) rotates about the beam point (SP).

18. Method according to Claim 16 or 17, **characterised in that** the emitted terahertz radiation (S) and the reflected terahertz radiation (R) at least partly have the same beam path.

19. Method according to any one of Claims 16 or 18, **characterised in that** a test object (2) consisting of plastic is measured by measuring a delay time of the terahertz radiation which is reflected at boundary layers, in particular at surfaces of the test object (2), e. g. of a pipe outer wall and/or pipe inner wall and/or abutting material layers within the test object (2).

## Revendications

1. Dispositif de mesure destiné à mesurer des objets d'essai avec

- une unité émettrice-réceptrice (3 ; 3a) avec

-- un émetteur (9) destiné à émettre un rayonnement Térahertz (S) dans un plan x-y ($E_{xy}$) à partir d'un point de faisceau (SP) et
-- un récepteur associé (10) destiné à détecter un rayonnement Térahertz (R) réfléchi par un objet d'essai (2 ; 2a),

- un premier agencement de collimation et de focalisation (4)

-- avec des éléments de collimation et de focalisation (14, 15, 16, 17) destinés à convertir le rayonnement Térahertz (S) émis en rayonnement collimaté et à focaliser le rayonnement Térahertz (S) dans le point de faisceau (SP),
-- les éléments de collimation et de focalisation (14, 15, 16, 17) étant disposés de telle sorte que deux éléments de collimation et de focalisation (14, 15, 16, 17) voisins dans le plan x-y ($E_{xy}$) forment entre eux un angle ($\alpha_{KF}$) de 90°, de façon que les éléments de collimation et de focalisation (14, 15, 16, 17) forment un carré de collimation et de focalisation (18),
- un point focal commun ($B_1$) des éléments de collimation et de focalisation (14, 15, 16, 17) se situant dans le plan x-y ($E_{xy}$) dans le point de faisceau (SP),

- une zone de réception de l'objet d'essai (6) située dans le plan x-y ($E_{xy}$) pour y disposer l'objet d'essai (2 ; 2a),
- au moins un ensemble de miroirs (5 ; 39)

-- avec des éléments miroir (19, 20, 21, 22 ; 41, 42, 42, 43, 44) destinés à réorienter le rayonnement Térahertz (S) collimaté et le rayonnement Térahertz (S) réfléchi entre l'agencement de collimation et de focalisation (4) et la zone de réception de l'objet d'essai (6),
- les éléments miroir (19, 20, 21, 22 ; 41, 42, 43, 44) étant disposés de telle sorte que deux éléments miroirs (19, 20, 21, 22 ; 41, 43, 44) forment respectivement un angle de 90° entre eux dans le plan x-y ($E_{xy}$), de façon que les éléments miroir (19, 20, 21, 22 ; 41, 43 , 44) forment un rectangle de miroirs (23, 40),
-- des surfaces réfléchissantes (24, 25, 26, 27) du rectangle de miroirs (23, 40) étant parallèles à une diagonale de collimation et de focalisation (28, 29) du carré de collimation et de focalisation (18),
-- les éléments de collimation et de focalisation (14, 15, 16, 17) se situant à l'intérieur du rectangle de miroirs (23, 40) et

- une unité de commande (7) destinée à évaluer le rayonnement Térahertz (R) détecté.

2. Dispositif de mesure suivant la revendication 1, **caractérisé en ce que** deux éléments de collimation et de focalisation (14, 15, 16, 17) voisins sont perpendiculaires, l'un par rapport à l'autre, dans le plan x-y ($E_{xy}$) et **en ce qu'**en plus deux éléments miroir (19, 20, 21, 22 ; 41, 42, 43, 44) voisins sont perpendiculaires l'un par rapport à l'autre dans le plan x-y ($E_{xy}$).

3.  Dispositif de mesure suivant la revendication 1, **caractérisé en ce que** les éléments de collimation et de focalisation (14, 15, 16, 17) sont conçus identiques, notamment en forme et/ou en taille.

4.  Dispositif de mesure suivant une quelconque des revendications précédentes, **caractérisé en ce que** les éléments de collimation et de focalisation (14, 15, 16, 17) sont conçus comme lentilles.

5.  Dispositif de mesure suivant une quelconque des revendications précédentes, **caractérisé en ce que** les éléments miroir (19, 20, 21, 22) sont conçus identiques, notamment en forme et/ou en taille.

6.  Dispositif de mesure suivant une quelconque des revendications précédentes, **caractérisé en ce que** l'agencement de miroirs (5, 39) est conçu de telle sorte qu'un premier élément miroir (19, 20, 21, 22 ; 41, 42, 43, 44) réoriente le rayonnement collimaté (S) vers un second élément miroir (19, 20, 21, 22 ; 41, 42, 43, 44), le second élément miroir (19, 20, 21, 22 ; 41, 42, 43, 44) réorientant le rayonnement (S) vers la zone de réception de l'objet d'essai (6).

7.  Dispositif de mesure suivant la revendication 6, **caractérisé en ce que** l'agencement de miroirs (5 ; 39) est conçu de telle sorte que le rayonnement collimaté (S) frappe le premier élément miroir (19, 20, 21, 22 ; 41, 42, 43, 44) et le second élément miroir (19, 20, 21, 22 ; 41, 42, 43, 44) avec un angle d'incidence ($\alpha_{EIN}$) de 45°.

8.  Dispositif de mesure suivant une quelconque des revendications précédentes, **caractérisé en ce que** l'unité émettrice-réceptrice (3 ; 3a) est conçue de telle sorte que le rayonnement émis (S) dans le plan x-y (E-xy) est rotatif autour du point de faisceau (SP).

9.  Dispositif de mesure suivant la revendication 8, **caractérisé en ce que** l'unité émettrice-réceptrice (3 ; 31) est conçue de telle sorte qu'elle est disposée dans le point de faisceau (SP) de façon rotative autour d'un axe de rotation (12).

10. Dispositif de mesure suivant la revendication 8, **caractérisé en ce que** l'unité émettrice-réceptrice (3 ; 3a) présente un miroir de rotation (11) qui est rotatif autour d'un axe de rotation (12) s'étendant à travers le point de faisceau (SP) de façon perpendiculaire au plan x-y ($E_{xy}$).

11. Dispositif de mesure suivant la revendication 10, **caractérisé en ce que** le miroir de rotation (11) est basculé autour d'un angle d'inclinaison ($\alpha_K$) de 45° par rapport au plan x-y ($E_{xy}$).

12. Dispositif de mesure suivant une quelconque des revendications précédentes, **caractérisé en ce que** dans la zone de réception de l'objet d'essai (6) un second agencement de collimation et de focalisation (37) est disposé de façon concentrique par rapport à un point focal de l'objet d'essai (B2).

13. Dispositif de mesure suivant la revendication 12, **caractérisé en ce que** le premier agencement de collimation et de focalisation (4) et le second agencement de collimation et de focalisation (37) sont conçus identiques.

14. Dispositif de mesure suivant la revendication 12 ou 13, **caractérisé en ce que** respectivement une diagonale de collimation et de focalisation (28 ; 32) du premier agencement de collimation et de focalisation (4) et du second agencement de collimation et de focalisation (37) coïncide avec une médiane (33) du rectangle de miroirs (23).

15. Dispositif de mesure suivant une quelconque des revendications précédentes, **caractérisé en ce que** l'unité de commande (6) est conçue pour mesurer l'objet d'essai au moyen du rayonnement Térahertz sur la base de la mesure d'une différence de temps de trajet du rayonnement Térahertz qui est réfléchi par des couches limites, p.ex. une paroi externe de tube, une paroi interne de tube et des couches de matériau adjacentes l'une à l'autre à l'intérieur de l'objet d'essai (2).

16. Procédé de mesure d'objets d'essai (2, 2a) comprenant les étapes suivantes qui consistent à :

    - fournir un dispositif de mesure (1 ; 1a ; 1b) suivant au moins une des revendications 1 à 14,
    - disposer un objet d'essai (2; 2a) de telle sorte que l'axe longitudinal central (35, 35a) de celui-ci s'étende à travers le plan x-y ($E_{xy}$) dans la zone de réception de l'objet d'essai (6),
    - émettre un rayonnement Térahertz au moyen d'un émetteur (9),
    - collimater le rayonnement Térahertz (S) émis pour convertir le rayonnement Térahertz (S) émis en un rayonnement Térahertz collimaté au moyen du premier agencement de collimation et de focalisation (4),
    - réorienter le rayonnement Térahertz (S) collimaté au moyen de l'ensemble de miroirs (5, 39) vers la zone de réception de l'objet d'essai (6),
    - réfléchir le rayonnement Térahertz (S) collimaté par l'objet d'essai (2, 2a)

- réorienter le rayonnement Térahertz (R) réfléchi au moyen de l'ensemble de miroirs (5, 39) dans la direction du récepteur (10),
- focaliser le rayonnement Térahertz (R) réfléchi au moyen du premier agencement de collimation et de focalisation (4) sur le point focal commun ($B_1$) des éléments de collimation et de focalisation (14, 15, 16, 17),
- détecter le rayonnement Téraherz (R) focalisé au moyen de l'émetteur (10), et
- évaluer le rayonnement Térahertz (R) détecté.

17. Procédé suivant la revendication 16, **caractérisé en ce que** le rayonnement Térahertz (S) émis est en rotation autour du point de faisceau (SP).

18. Procédé suivant la revendication 16 ou 17, **caractérisé en ce que** le rayonnement Térahertz (S) émis et le rayonnement Térahertz (R) réfléchi ont au moins partiellement la même trajectoire de faisceau.

19. Procédé suivant une des revendications 16 à 18, **caractérisé en ce qu'**un objet d'essai (2) en matière artificielle est mesuré, en mesurant une différence de temps de trajet du rayonnement Térahertz qui est réfléchi par des couches limites, notamment des surfaces de l'objet d'essai (2), p.ex. une paroi externe de tube et/ou une paroi interne de tube et/ou des couches de matériau adjacentes l'une à l'autre à l'intérieur de l'objet d'essai (2).

Fig. 1

Fig. 2

Fig. 3

Fig. 4

26  35a,  21  37  2a         1a        y↑
    B₂                                  z⊙→x

23→

25
20
16

13

15
18

24    30   SP    S,
                 R

# Fig. 5

26  37  21  35a, 2a    36    y↑
            B₂               z⊙→x

23→

25
20
16

13

15
18

24  SP  30  α_KF

# Fig. 6

18

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011078539 A1
- US 20110112795 A1
- WO 9507471 A1
- US 20100079754 A1
- EP 2752287 A1
- DE 19852335 A1